# EUROPÄISCHE PATENTSCHRIFT

(11) **EP 0 503 242 B1**
(45) Veröffentlichungstag und Bekanntmachung des Hinweises auf die Patenterteilung: **07.09.1994**
(21) Anmeldenummer: 92100982.5
(22) Anmeldetag: 22.01.1992
(51) Int. Cl.: C02F 1/48, C02F 1/46

(54) **Vorrichtung zur magnetischen Behandlung von strömendem hartem Wasser**
Apparatus for the magnetic treatment of flowing hard water
Dispositif pour le traitement magnétique de courants d'eau dure

(30) Priorität: 14.03.1991 DE 4108336
(43) Veröffentlichungstag der Anmeldung: 16.09.1992
(73) Patentinhaber: BWT AKTIENGESELLSCHAFT, 5310 Mondsee (AT)
(72) Erfinder: Oberhauser, Ernst, A-5440 Golling 311 (AT)
(74) Vertreter: Wolf, Eckhard, Dr.-Ing.

(56) Entgegenhaltungen:
- EP-A- 0 194 012
- PATENT ABSTRACTS OF JAPAN vol. 8, no. 232 (C-248)25. Oktober 1984
- WORLD PATENTS INDEX Week 7718, Derwent Publications Ltd., London, GB; AN 77-32386Y

## Beschreibung

Die Erfindung betrifft eine Vorrichtung zur Behandlung von strömendem hartem Wasser, bei welchem das Wasser mit dem Magnetfeld eines Permanentmagneten beaufschlagt und im Bereich des Magnetfelds eine von dem Wasser umströmte, alkalitätserzeugende Metallelektrode angeordnet ist, wobei die Metallelektrode in einem an eine Wasserleitung anschließendbaren, mit einem Wasserein- und -auslaß versehenen Gehäuse angeordnet ist.

Bei der physikalischen Behandlung von harten Wässern ist es bekannt, magnetische Felder einzusetzen, um eine Beeinflussung der Wasserbeschaffenheit dahingehend zu erreichen, daß eine Steinbildung nicht in der unerwünschten Kostenform eintritt, daß eine vorhandene Steinbildung abgebaut wird und daß Korrosionsvorgänge günstig beeinflußt werden. Der Wirkungsmechanismus derartiger Verfahren wird darauf zurückgeführt, daß sich im Bereich des Magneten eine Mikrokeimbildung ergibt, die aufgrund ihrer Struktur nicht zum Verfilzen neigt. Versuche haben jedoch gezeigt, daß die Funktionsfähigkeit des Verfahrens in hohem Maße von der speziellen Konsistenz und Konzentration der Wasserinhaltstoffe sowie von der Wasserführung im Bereich des Magneten abhängt.

Zur Verbesserung dieses Effekts ist es außerdem bekannt (Patent Abstract of Japan, Vol. 8, No. 232 (C 248) & JP-A-59112895), in den Wasserstrom zusätzlich eine Opferanode einzuführen, die unter Abgabe von Metallionen, wie Ca²⁺ oder Mg²⁺ zu einer alkalischen Reaktion führen. Weiter wird dort vorgeschlagen, durch Zufuhr von Luft eine Spiralbewegung innerhalb der Behandlungskammer zu erzeugen und dadurch die Keimbildung zu verbessern. Der Zusatz von Luft in Trinkwasser ist jedoch problematisch, weil dadurch Fremdstoffe in das Wasser eingetragen werden können, die zu einer Verschlechterung der Wasserqualität und zu einer organischen Aufkeimung führen können. Aus diesem Grund ist der Zusatz von Luft nach den europäischen Wassergesetzen nicht zulässig.

Ausgehend hiervon liegt der Erfindung die Aufgabe zugrunde, die bekannte Vorrichtung der eingangs angegebenen Art dahingehend zu verbessern, daß auch ohne Eintrag von Fremdstoffen eine Turbulenz im strömenden Wasser erzeugt werden kann, die sowohl die Wirksamkeit der Opferelektrode als auch die Mikrokeimbildung in der Behandlungskammer fördert.

Zur Lösung dieser Aufgabe wird gemäß der Erfindung vorgeschlagen, daß an einem Tragkörper zwei unter Freilassung eines Strömungsspalts im Abstand voneinander angeordnete, zueinander parallele, querpolarisierte plattenförmige Permanentmagnete angeordnet sind, die eine turbulenzerzeugende Prallfläche für das strömende Wasser bilden. Vorteilhafterweise ist der Tragkörper in dem Gehäuse unter Verstellung der Ausrichtung des Strömungsspalts gegenüber dem Wasserein- und -auslaß drehbar angeordnet, so daß sich je nach Stellung des Tragkörpers eine mehr oder weniger große Prallfläche und damit ein mehr oder weniger großer Strömungsquerschnitt für das ankommende Wasser ergibt. Dadurch kann über eine einstellbare Turbulenz die Mikrokeimbildung im strömenden Wasser zusätzlich beeinflußt werden.

Die alkalitätserzeugende Metallelektrode ist zweckmäßig mit einem im wasserführenden Bereich angeordneten Metallteil aus einem elektrochemisch edleren Metall, insbesondere mit dem Gehäuse oder einem Gehäuseteil, galvanisch verbunden. Sie besteht bevorzugt aus Magnesium oder einer speziellen Magnesiumlegierung, während das Metallteil zweckmäßig aus einer kupferhaltigen Legierung, vorzugsweise aus Messing besteht.

Mit den erfindungsgemäßen Maßnahmen wird die durch das Magnetfeld verursachte Mikrokeimbildung dadurch unterstützt, daß auf elektrochemischem Wege eine pH-Wertverschiebung des Wassers in Richtung basisch dadurch erfolgt, daß von der Metallelektrode Metallionen in Lösung gehen und gleichzeitig an anderer Stelle, vorzugsweise im Bereich des elektrochemisch positiveren Metallteils oder des Gehäuses OH⁻-Ionen entstehen. Im basischen Bereich verschiebt sich das Gleichgewicht der Härtebildner beispielsweise von der Hydrogencarbonatform in die Carbonatform. Da die Carbonatform schwerer löslich ist als die Hydrogencarbonatform, fallen die Härtebildner in ihrer Carbonatform als Kristallkeime aus:

HCO₃⁻ + OH⁻ → CO₃²⁻ + H₂O

Ca²⁺ + CO₃²⁻ → CaCO₃

Gemäß einer weiteren vorteilhaften Ausgestaltung der Erfindung ist die Metallelektrode unter Herstellung der galvanischen Verbindung an dem in das Gehäuse lösbar einsetzbaren metallischen Tragkörper im Bereich zwischen den beiden Permanentmagneten angeordnet, vorzugsweise mit diesen verschraubt.

Die Metallelektrode weist vorteilhafterweise die Gestalt eines rotationssymmetrischen Zapfens auf, der mit seinem dem Tragkörper gegenüberliegenden, vorzugsweise als verbreiterte Spitze ausgebildeten freien Ende über die benachbarten stirnseitigen Kanten der plattenförmigen Permanentmagnete überstehen und dort in den Wasserführungsbereich des Gehäuses eingreifen kann.

Der Permanentmagnet besteht vorteilhafterweise aus einem nichtferritischen ferromagnetischen Material, vorzugsweise aus einer Kobalt-Samarium-Legierung, womit eine hohe magnetische Feldstärke erzielt werden kann. Der der Wasserströmung ausgesetzte Permanentmagnet ist zweckmäßig in eine wasserundurchlässige Kunststoffhülle eingeschlossen, die dafür sorgt, daß keine Fremdstoffe aus dem magnetischen Material in das Wasser gelangen können.

Eine weitere vorteilhafte Weiterbildung der Erfindung sieht vor, daß in Strömungsrichtung hinter der Metallelektrode ein kombiniertes Absperr- und Rückschlagventil im Gehäuse angeordnet ist.

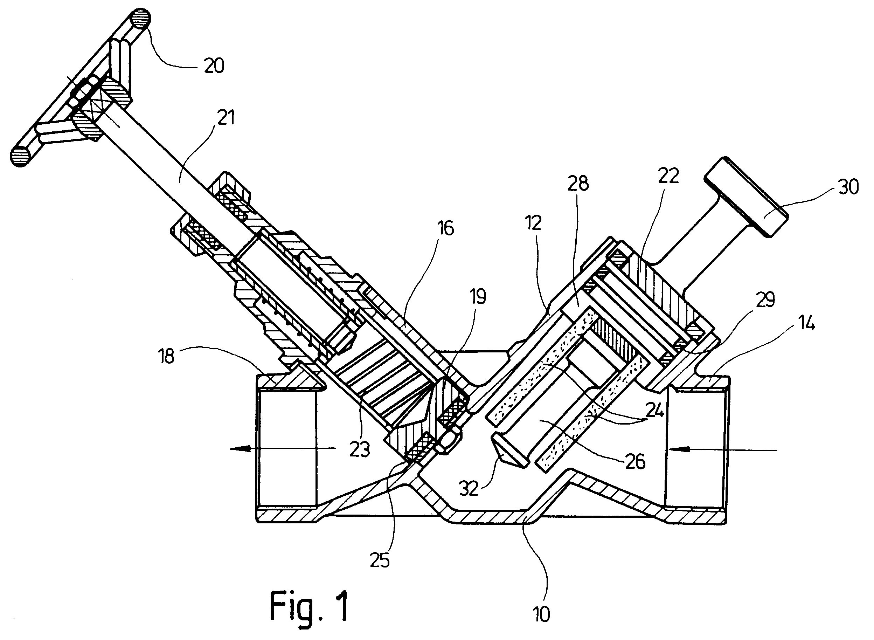

Im folgenden wird die Erfindung anhand eines in der Zeichnung in schematischer Weise dargestellten Ausführungsbeispiels näher erläutert. Es zeigen
- Fig. 1: einen senkrechten Schnitt durch eine in eine Wasserleitung einsetzbare Wasserbehandlungsvorrichtung;
- Fig. 2: eine Seitenansicht der Doppelmagnetleiteinheit der Vorrichtung nach Fig. 1.

Die in der Zeichnung dargestellte Wasserbehandlungsvorrichtung weist ein Gehäuse 10 aus Messing auf, dessen Gehäuseteil 12 über einen Wassereinlaßstutzen 14 mit Rohwasser aus einer nicht dargestellten Wasserleitung beaufschlagbar ist und dessen Gehäuseteil 16 einen mit dem Wassereinlaß 14 fluchtenden, an den stromabseitigen Teil der Wasserleitung anschließbaren Auslaßstutzen 18 aufweist. In dem Gehäuseteil 16 befindet sich ein Ventilkörper 19, der entweder durch einen über ein Handrad 20 betätigbare Stößel 21 unter Bildung eines Absperrventils oder - bei geöffnetem Absperrventil - unter der Wirkung einer Druckfeder 23 unter Bildung eines Rückschlagventils gegen den Ventilsitz 25 andrückbar ist. Das Rückschlagventil sorgt dafür, daß von der Verbraucherseite (Stutzen 18) kein Wasser in den Gehäuseteil 12 und die davor liegenden Wasserleitungen zurückströmen kann.

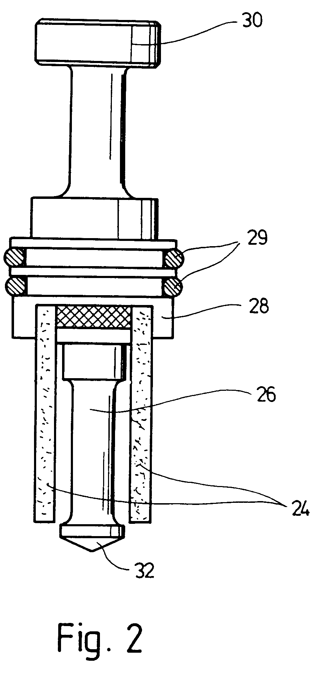

In den Gehäuseteil 12 ist die in Fig. 2 im Detail gezeigte Doppelmagnetleiteinheit eingesetzt, die einen metallischen Tragkörper 28, zwei über den Tragkörper im Abstand voneinander überstehende plattenförmige Permanentmagnete 24 sowie eine im Abstandsbereich zwischen den Permanentmagneten 24 angeordnete, in den Tragkörper 28 eingeschraubte zapfenförmige Metallelektrode 26 aus einer speziellen Magnesiumlegierung aufweist. Die Metallelektrode 26 steht mit ihrer dem Tragkörper 28 gegenüberliegenden verbreiterten Spitze über die benachbarten Stirnkanten 34 der Permanentmagnete 24 über. Der Tragkörper 28 ist mittels zweier O-Ringe 29 gegenüber der zylindrischen Innenfläche des Gehäuseteils 12 abgedichtet und greift mit einem Drehknopf 30 durch einen lösbaren Gehäusedeckel 22 nach außen hindurch. Die Doppelmagneteinheit kann über den Drehknopf 30 im Gehäuse um mindestens 90° gedreht werden. Dadurch kann sowohl der Strömungsquerschnitt als auch die Strömungsführung und damit die Wirbelbildung im Gehäuseteil 12 variiert werden.

Zusammenfassend ist folgendes festzustellen: Die Erfindung bezieht sich auf eine Vorrichtung zur Behandlung von strömendem hartem Wasser, bei welchem das Wasser mit dem Magnetfeld eines Permanentmagneten 24 beaufschlagbar ist. Zur Verbesserung der durch das Magnetfeld hervorgerufenen Mikrokeimbildung ist im Bereich des Magnetfelds eine von dem Wasser umströmte, alkalitätserzeugende Metallelektrode 26 vorzugsweise aus einer Magnesiumlegierung angeordnet, die mit dem aus einem elektrochemisch edleren Metall, wie Messing bestehenden Gehäuse 10 galvanisch verbunden ist.

## Patentansprüche

1. Vorrichtung zur Behandlung von strömendem hartem Wasser, bei welchem das Wasser mit dem Magnetfeld eines Permanentmagneten (24) beaufschlagt ist und im Bereich des Magnetfelds eine von dem Wasser umströmte, alkalitätserzeugende Metallelektrode (26) angeordnet ist, wobei die Metallelektrode (26) in einem an eine Wasserleitung anschließbaren, mit einem Wasserein- und -auslaß (14,18) versehenen Gehäuse (10) angeordnet ist, **dadurch gekennzeichnet**, daß an einem Tragkörper (28) zwei unter Freilassung eines Strömungsspalts im Abstand voneinander angeordnete, zueinander parallele, quer polarisierte plattenförmige Permanentmagnete (24) angeordnet sind, die eine turbulenzbildende Prallfläche für das strömende Wasser bilden.

2. Vorrichtung nach Anspruch 1, **dadurch gekennzeichnet**, daß der Tragkörper (28) in dem Gehäuse (10) unter Verstellung der Ausrichtung des Strömungsspalts gegenüber dem Wasserein- und -auslaß (14,18) drehbar angeordnet ist.

3. Vorrichtung nach Anspruch 1 oder 2, **dadurch gekennzeichnet**, daß die Metallelektrode (26) mit einem im wasserführenden Bereich angeordneten Metallteil aus einem elektrochemisch edleren Metall, insbesondere mit dem Gehäuse (10) oder einem Gehäuseteil galvanisch verbunden ist.

4. Vorrichtung nach Anspruch 3, **dadurch gekennzeichnet**, daß die Metallelektrode (26) unter Herstellung der galvanischen Verbindung an dem in das Gehäuse (10,12) lösbar einsetzbaren Tragkörper (28) angeordnet, vorzugsweise mit diesem verschraubt ist.

5. Vorrichtung nach einem der Ansprüche 1 bis 4, **dadurch gekennzeichnet**, daß die Metallelektrode (26) aus einer Magnesiumlegierung besteht.

6. Vorrichtung nach einem der Ansprüche 1 bis 5, **dadurch gekennzeichnet**, daß das Gehäuse (10) aus einer kupferhaltigen Legierung, vorzugsweise aus Messing besteht.

7. Vorrichtung nach einem der Ansprüche 1 bis 6, **dadurch gekennzeichnet**, daß die Metallelektrode (26) im Bereich zwischen den beiden Permanentmagneten (24) angeordnet ist.

8. Vorrichtung nach einem der Ansprüche 1 bis 7, **dadurch gekennzeichnet**, daß die Metallelektrode die Gestalt eines rotationssymmetrischen Zapfens aufweist.

9. Vorrichtung nach einem der Ansprüche 1 bis 8, **dadurch gekennzeichnet**, daß die Metallelektrode (26) mit ihrem dem Tragkörper (28) gegenüberliegenden, vorzugsweise als verbreiterte Spitze (32) ausgebildeten Ende über die benachbarten stirnseitigen Kanten (34) der plattenförmigen Permanentmagnete (24) übersteht.

10. Vorrichtung nach einem der Ansprüche 1 bis 9, **dadurch gekennzeichnet**, daß der Tragkörper (28) einen durch eine Öffnung im Gehäuse (10,12) oder in einem Gehäusedeckel (22) überstehenden Drehgriff (30) aufweist.

11. Vorrichtung nach einem der Ansprüche 1 bis 10, **dadurch gekennzeichnet**, daß der Permanentmagnet (24) aus nicht ferritischem ferromagnetischem Material, vorzugsweise aus einer Kobalt-Samarium-Legierung besteht.

12. Vorrichtung nach einem der Ansprüche 1 bis 11, **dadurch gekennzeichnet**, daß der Permanentmagnet (24) in eine wasserundurchlässige Kunststoffolie eingeschlossen ist.

13. Vorrichtung nach einem der Ansprüche 2 bis 11, **gekennzeichnet durch** ein in Strömungsrichtung hinter der Metallelektrode (26) im Gehäuse angeordnetes Absperr- und/oder Rückschlagventil (19,20,21,23,25).

## Claims

1. A device for the treatment of flowing, hard water, in which the water is acted upon by the magnetic field of a permanent magnet (24), and in the region of the magnetic field is arranged an alkalinity-generating metal electrode (26) around which the water flows, the metal electrode (26) being arranged in a housing (10), provided with a water inlet and outlet (14, 18), which can be connected to a water pipe line, characterised in that two parallel, cross-polarised, plate-shaped permanent magnets (24) arranged at a distance from one another leaving a flow gap are arranged on a support (28), which magnets form a turbulence-forming impact surface for the flowing water.

2. A device according to claim 1, characterised in that the support (28) is arranged in a rotatable manner in the housing (10), adjusting the alignment of the flow gap with respect to the water inlet and outlet (14, 18).

3. A device according to claim 1 or 2, characterised in that the metal electrode (26) is electrically connected to a metal part made of an electrochemically more noble metal, particularly to the housing (10) or a housing part, arranged in the water-carrying region.

4. A device according to claim 3, characterised in that the metal electrode (26) is arranged on the support (28), preferably screwed to said support, which can be inserted in a detachable manner in the housing (10,12), creating the electrical connection.

5. A device according to one of claims 1 to 4, characterised in that the metal electrode (26) is composed of a magnesium alloy.

6. A device according to one of claims 1 to 5, characterised in that the housing (10) is composed of a copper-containing alloy, preferably brass.

7. A device according to one of claims 1 to 6, characterised in that the metal electrode (26) is arranged in the region between the two permanent magnets (24).

8. A device according to one of claims 1 to 7, characterised in that the metal electrode has the form of a rotationally symmetrical pin.

9. A device according to one of claims 1 to 8, characterised in that the metal electrode (26) with its end designed preferably as a widened tip (32) opposite the support (28) projects beyond the adjacent front edges (34) of the plate-shaped permanent magnet (24).

10. A device according to one of claims 1 to 9, characterised in that the support (28) has a turning handle (30) projecting through an opening in the housing (10, 12) or in a housing cover (22).

11. A device according to one of claims 1 to 10, characterised in that the permanent magnet (24) is composed of non-ferritic, ferromagnetic material, preferably a cobalt-samarium alloy.

12. A device according to one of claims 1 to 11, characterised in that the permanent magnet (24) is enclosed in a water-impermeable plastic film.

13. A device according to one of claims 2 to 11, characterised by a stop and/or check valve (19, 20, 21, 23, 25) arranged in the housing in the direction of flow behind the metal electrode (26).

## Revendications

1. Dispositif pour le traitement d'eau dure courante dans lequel l'eau est soumise au champ magnétique d'un aimant permanent (24) et dans lequel une électrode métallique (26) génératrice d'alcalinité entourée d'eau est disposée dans la région du champ magnétique, l'électrode métallique (26) étant placée dans un boîtier (10) muni d'une entrée et d'une sortie d'eau (14, 18), **caractérisé en ce** que sur un corps de support (28) sont disposés à distance l'un de l'autre et en laissant subsister entre eux une fente d'écoulement, deux aimants permanents (24) parallèles en forme de plaques polarisés à angle droit qui forment pour l'eau courante une surface de rebondissement créant une turbulence.

2. Dispositif selon la revendication 1, caractérisé en ce que le corps de support (28) est monté de manière tournante dans le boitier (10) de façon à modifier l'orientation de la fente d'écoulement par rapport à l'entrée et à la sortie d'eau (14, 18).

3. Dispositif selon l'une des revendications 1 ou 2, caractérisé en ce que l'électrode métallique (26) est reliée directement à un élément métallique disposé dans la section conduisant de l'eau et constitué d'un métal électrochimiquement plus noble, en particulier au boîtier (10) ou à un élément de boîtier.

4. Dispositif selon la revendication 3, caractérisé en ce que l'électrode métallique (26) est montée, de préférence vissée, avec établissement de la liaison directe, sur le corps de support (28) emboîtable de manière amovible dans le boîtier (10, 12).

5. Dispositif selon l'une des revendications 1 à 4, caractérisé en ce que l'électrode métallique (26) est constitué d'un alliage de magnésium.

6. Dispositif selon l'une des revendications 1 à 5, caractérisé en ce que le boîtier (10) est constitué d'un alliage contenant du cuivre, de préférence de laiton.

7. Dispositif selon l'une des revendications 1 à 6, caractérisé en ce que l'électrode métallique (26) est disposée dans la région entre les deux aimants permanents (24).

8. Dispositif selon l'une des revendications 1 à 7, caractérisé en ce que l'électrode métallique présente la forme d'un tourillon à symétrie de révolution.

9. Dispositif selon l'une des revendications 1 à 8, caractérisé en ce que l'extrémité de l'électrode métallique (26) détournée du corps de support (28) et conformée de préférence en pointe élargie (32), fait saillie par rapport aux arêtes frontales (34) voisines des aimants permanents (24) en forme de plaques.

10. Dispositif selon l'une des revendications 1 à 9, caractérisé en ce que le corps de support (28) comprend une poignée tournante (30) qui dépasse d'une ouverture dans te boitier (10, 12) ou dans un couvercle de boitier (22).

11. Dispositif selon l'une des revendications 1 à 10, caractérisé en ce que l'aimant permanent (24) est constitué d'un matériau ferromagnétique non ferritique, de préférence d'un alliage au cobalt et samarium.

12. Dispositif selon l'une des revendications 1 à 11, caractérisé en ce que l'aimant permanent (24) est enfermé dans une feuille de matière plastique imperméable à l'eau.

13. Dispositif selon l'une des revendications 2 à 11, caractérisé en ce qu'il comprend une soupape d'arrêt et/ou un clapet antiretour (19, 20, 21, 23, 25) disposés, dans la direction d'écoulement, en aval de l'électrode métallique (26).
